Europäisches Patentamt

European Patent Office

Office européen des brevets

(11) Publication number: **0 128 999**
**B1**

(12) **EUROPEAN PATENT SPECIFICATION**

(45) Date of publication of patent specification: **27.04.88**

(21) Application number: **84101447.5**

(22) Date of filing: **14.02.84**

(51) Int. Cl.⁴: **B 65 D 19/00**

(54) Pallet and method for fabrication of a pallet.

(30) Priority: **25.03.83 SE 8301667**

(43) Date of publication of application:
**27.12.84 Bulletin 84/52**

(45) Publication of the grant of the patent:
**27.04.88 Bulletin 88/17**

(84) Designated Contracting States:
**DE FR GB SE**

(56) References cited:
**EP-A-0 069 552**
**CH-A- 560 562**
**DE-A-2 301 733**
**DE-A-2 423 523**
**DE-A-2 627 752**
**DE-A-2 719 229**
**DE-A-3 151 316**
**US-A-2 446 914**
**US-A-4 214 655**
**US-A-4 273 234**

(73) Proprietor: **International Business Machines Corporation**
**Old Orchard Road**
**Armonk, N.Y. 10504 (US)**

(72) Inventor: **Lycke, Anders Hans**
**Stugvägen 9**
**S-16146 Bromma (SE)**
Inventor: **Beck, Frans Erik**
**Slattervägen 36**
**S-17543 Järfälla (SE)**

(74) Representative: **Ekström, Gösta E.**
**IBM Svenska AB Intellectual Property**
**Department Box 962**
**S-181 09 Lidingö (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 128 999 B1

## Description

The invention relates to a pallet for use in a system for supplying a machine tool or robot preferably an assembly robot with tools and materials.

The robots make it possible to automize manufacture or assembly of relatively complicated devices.

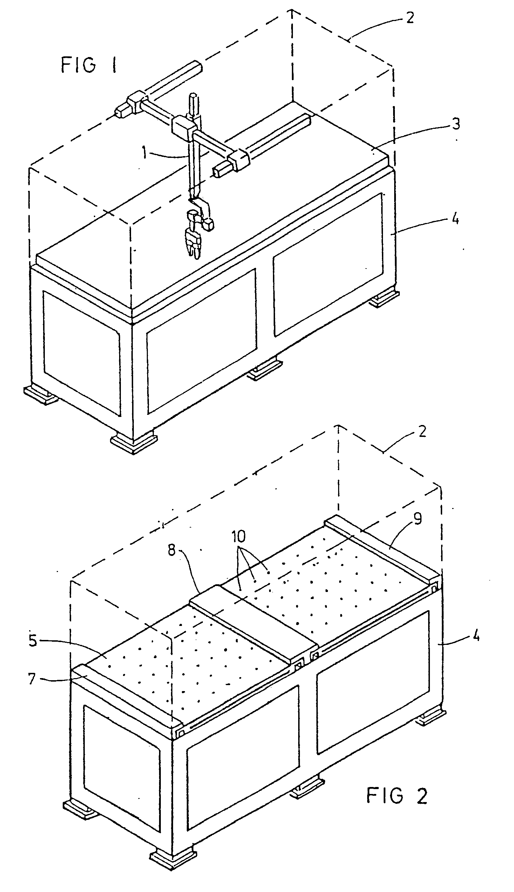

In a special type of robot (see fig. 1) the manipulator hand (1) operates within a limited work envelope (2) shown in phantom. Tools and materials are positioned on a work table (3) fixed mounted to the robot frame (4). Said work table must be of a very strong construction to avoid deflection and vibrations and must have a very plain upper plane. Holders for tools and materials are mounted in exactly defined positions on said work table. Thereby the tools and materials will be placed in exact defined positions within the work envelope of the robot.

In a robot system of this type problems arise when tools are to be exchanged and when new materials are to be supplied or when assembled devices are to be removed from the work table. These problems are accentuated when the work process are to be changed.

The robot must be deenergized as a precautionary measure. Removal of tool holders, material containers and holders for assembled devices and mounting of new ones are tedious and time consuming. Then the paid time ratio will be relatively low. This is especially true in production in short series, where robots are advantageous due to their great flexibility.

The invention as claimed is intended to remedy these drawbacks. It solves the problem of how to exchange tools and materials within the work envelope in a very fast way. This is accomplished by the use of an exchangeable work table. Preferably the work table is divided into two parts (see fig. 2), so called pallets, which are separately exchangeable. The exchange of pallets is performed by an automatically operated conveyor system (not shown).

It is prior known to use pallets for supporting articles while being moved around. For example, US—A—2.446.914 describes a pallet comprising an upper and lower plate of corrugated board or other paper stock material joined together in spaced relationship by means of square pipes of the same material glued to respective plates. By the use of paper stock material a pallet is provided which is light in weight, simple in construction and inexpensive to manufacture.

However, such a pallet is not usable in robot applications where a very rigid construction having very close tolerances are required.

The pallet manufactured according to the invention comprises an upper and a lower thin steel or aluminium plate joined together in spaced relationship by means of aluminium square pipes glued to respective plates and extruded aluminium sections partly inserted at opposite edges of said plates and glued thereto whereby eventual unevenness of the square pipes is compensated by the glue.

By this a very rigid and relatively light-weight pallet is provided which has very close tolerances and which is very cheap in manufacture compared with equivalent pallets.

The invention, which is defined in the attached claims is described in detail below with reference to drawings which illustrate only one specific embodiment, in which,

Figure 1 is a perspective view of a prior known robot system,

Figure 2 is a perspective view of a robot system with exchangeable work tables, pallets,

Figure 3A is a sectional view of a pallet,

Figure 3B is a perspective view of a pallet.

Fig. 1 schematically shows a typical, prior known robot system. A manipulator hand (1) is operable within the work envelope (2, shown in phantom) of the robot. A work table must be of a very strong construction to avoid deflection and vibrations. Besides the work table must have a very plain upper plane. Usually, very thick (about one inch thick) steel plates are used. The surface treatment of such large plates (about 2.0 × 0.8 square meters) is relatively complicated and very expensive. Therefore, the worktable is a very expensive part of a robot system. Besides, damages in such a work table can adversely affect the operations of the robot and may cause a long period of rest for reparation.

Figure 2 show a perspective view of a robot system in accordance with the invention provided with exchangeable work tables so called pallets (5, 6). The work table area is provided with guide rails (7, 8, 9) for guiding the pallets (5, 6) into an approximate work position within the work envelope of the robot whereupon the pallets are brought into an exactly defined work position and locked in that position by docking means.

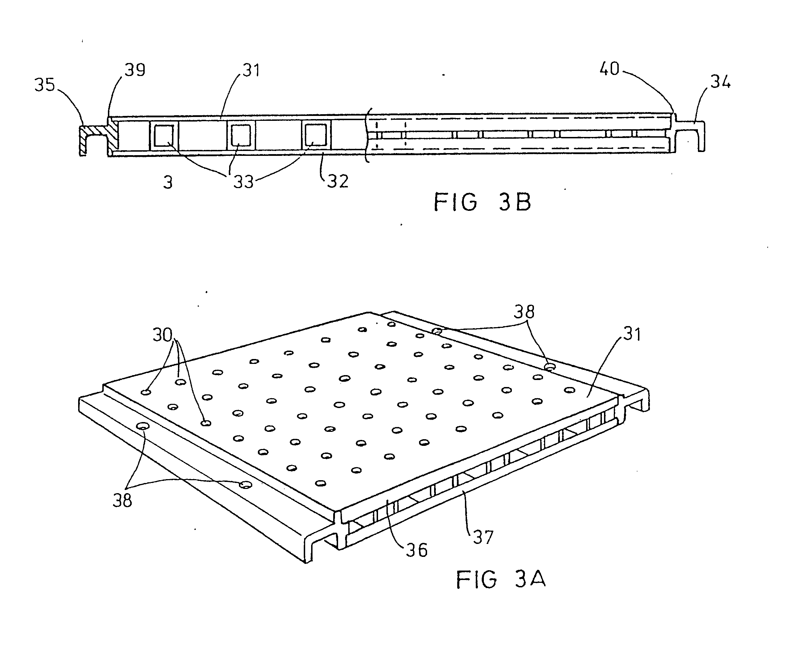

Figure 3A shows a perspective view of a preferred embodiment of a pallet. To meet the requirements of strength in construction and to get a very plain upper plane and at the same time keeping the weight very low the pallet is made in sandwich form as described below.

The pallet contains an upper thin aluminium or steel plate with a well defined pattern of holes (30) therein and a lower plate (32) with corresponding holes (not shown) having slightly bigger diameters. These holes are preferably made by punching which is a very cheap method. The two plates are joined together in a spaced relationship by means of square pipes (33) glued to respective plate (31 and 32) . The pallet is provided with extruded sections (34 and 35) which are partly inserted between the plates (31, 32) and fastened to them by means of gluing, for example epoxy resin gluing. In order to further stiffening the construction the edges (36 and 37) of the plates are inwardly folded. Special means (38) shown more in detail below are provided for cooperation with docking means.

The pallet is manufactured in the following way
   a) a first thin plate (31) with well defined dimensions and provided with first punched holes (30) and folded edges (36, 37) as shown in fig. 3A is placed on a very plain surface for example a diabase slab with the folded edges pointing upwards. The plate is flattened out by its own weight.

b) Parallel strings of glue are placed where the square pipes (33) and the extruded sections are to be positioned. The square pipes are put in their positions and pressed down by suitable means. Eventual unevennesses of the tubes are compensated by the glue. The extruded sections 34 and 35 provided with docking means (38) are placed in well defind positions by means of fixtures and glued to the edges 39 and 40 of the plate.

c) When the glue has hardened, strings of glue are placed on the upper side of the pipes 33 and on the extruded sections 34 and 3A second thin plate (32) is thereafter placed in an exact position above said first plate (31) and pressed down against the glue strings, by means of suitable means. Said second plate is also provided with a pattern of second holes (not shown) corresponding to the holes in said first plate (31). Said second holes having a diameter equal to or slightly larger than said holes (30) in plate 31. Said second plate (32) is also provided with folded edges in order to make the construction stiffer. After that the glue has hardened the pallet is complete and ready for use.

The described pallet construction is relatively lightweight which makes it easy to handle especially when the parts are made of aluminium. Due to the special sandwich build-up the pallet is very stiff. The production cost of a pallet according to the invention is only a tenth of the cost of a pallet in solid material.

## Claims

1. Method for fabrication of a pallet, having the following steps;

a) placing a first thin steel or aluminium plate (31) with well defined dimensions and folded up, opposite edges (36) on a flat surface, whereby the plate is flattened out by its own weight,

b) placing strings of glue along the unfolded opposite edges (39, 40) of said plate (31) and parallel strings of glue at equidistant distances between said unfolded edges (39, 40),

c) placing extruded aluminium sections (34, 35) on the glue at said unfolded opposite edges (39, 40) of said plate (31) particularly to project outside the plate and aluminium square pipes (33) on the glue at said equidistant distances between said unfolded edges (39, 40)

d) pressing down the pipes and extruded sections by suitable means,

e) placing strings of glue on the upper side of said pipes and said sections and

f) placing a second thin steel or aluminium plate (32) with folded down opposite edges and the same well defined dimensions as the first plate in an exact position above said first plate and pressing it down, so as to compensate for any unevenness of the tubes and sections, when the glue has hardened.

2. Method according to claim 1, characterized in that fixtures are used to place the extruded sections (34, 35) and the square pipes (33) in exact positions.

3. Method according to claim 1 or 2, characterized in that said plates (31, 32) are provided with a pattern of prepunched holes.

## Patentansprüche

1. Verfahren zur Herstellung einer Palette, dadurch gekennzeichnet, daß

a) ein erstes Stahl- oder Aluminiumblech (31) mit genauen Maßen und aufwärts gebogenen, sich gegenüberliegenden Kanten (36) auf eine ebene Fläche aufgebracht wird, wobei das Blech durch sein Eigengewicht flachgedrückt wird,

b) Klebstoff entlang der nicht gebogenen, sich gegenüberliegenden Kanten (39, 40) des Bleches (31) sowie parallel in gleichen Abständen zwischen den nicht gebogenen Kanten (39, 40) aufgebracht wird,

c) stranggepreßte Aluminiumabschnitte (34, 35) am Klebstoff der nicht gebogenen, sich gegenüberliegenden Kanten (39, 40) des Bleches (31) angebracht werden, so daß sie über das Blech hinausragen, und daß Aluminiumröhren (33) quadratischen Querschnitts am Klebstoff in gleichen Abständen zwischen den nicht gebogenen Kanten (39, 40) angebracht werden,

d) die Röhren und stranggepreßten Abschnitte durch geeignete Mittel nach unten gedrückt werden,

e) Klebstoff auf die obere Seite der Röhren und der Abschnitte aufgebracht wird, und daß

f) ein zweites Stahl- oder Aluminiumblech (32) mit nach unten gebogenen, sich gegenüberliegenden Kanten und gleichen genauen Maßen wei das erste Blech genau über dem erste Blech positioniert wird und dieses nach unten drückt, so daß jegliche Unebenheit der Röhren und Abschnitte ausgeglichen wird, sobald der Klebstoff ausgehärtet ist.

2. Verfahren nach Anspruch 1, dadurch gekennzeichnet, daß die stranggepreßten Abschnitte (34, 35) und die Röhren (33) quadratischen Querschnitts mittels Halterungen in exakter Position gehalten werden.

3. Verfahren nach Anspruch 1 oder 2, dadurch gekennzeichnet, daß die Bleche (31, 32) vorgestanzte Löcher aufweisen.

## Revendications

1. Procédé de fabrication d'une palette, comprenant les étapes suivantes;

a) mise en place d'une première plaque mince en acier ou en aluminium (31) aux cotes bien déterminées et repliée, côtés opposés (36) sur une surface plane, de sorte que la plaque est aplatie par son propre poids,

b) mise en place de cordons de colle le long des côtés opposés non pliés (39, 40) de ladite plaque

(31) et de cordons de colle parallèles à intervalles équidistants entre lesdits côtés non pliés (39, 40),

c) mise en place de profilés extrudés en aluminium (34, 35) sur la colle auxdits côtés opposés non pliés (39, 40) de ladite plaque (31) en particulier pour déborder à l'extérieur de la plaque et mise en place de tubes carrés en aluminium (33) sur la colle auxdits intervalles équidistants entre lesdits côtés non pliés (39, 40),

d) compression des tubes et des profilés extrudés par des moyens appropriés,

e) mise en place de cordons de colle sur la face supérieure desdits tubes et desdits profilés et

f) mise en place d'une seconde plaque mince en acier ou en aluminium (32) avec des côtés opposés rabattus et les mêmes cotes bien déterminées que la première plaque dans une position précise au-dessus de ladite première plaque et compression de l'ensemble, de façon à compenser toute inégalité des tubes et des profilés, après durcissement de la colle.

2. Procédé selon la revendication 1, caractérisé par le fait que des dispositifs de serrage sont utilisés pour mettre en place les profilés extrudés (34, 35) et les tubes carrés (33) en position précise.

3. Procédé selon les revendications 1 ou 2, caractérisé par le fait que lesdites plaques (31, 32) présentent un motif de trous préperforés.

FIG 1

FIG 2

FIG 3B

FIG 3A

0 128 999